# EUROPEAN PATENT SPECIFICATION

(11) **EP 1 936 160 B1**
(45) Date of publication and mention of the grant of the patent: **11.07.2012**
(21) Application number: 06127171.4
(22) Date of filing: 22.12.2006
(51) Int. Cl.: F02D 41/00, F02D 37/02, F02D 41/12, F02P 9/00, F01N 3/08

(54) **Exhaust gas treatment device regeneration inhibiting fuel combustion in an engine cylinder**
Regeneration einer Abgasnachbehandlungsvorrichtung durch unterbinden der Kraftstoffverbrennung in einem Zylinder einer Brennkraftmaschine
Régénération d'un dispositif de traitement des gaz d'échappement empêchant la combustion du carburant dans un cylindre d'un moteur

(43) Date of publication of application: 25.06.2008
(73) Proprietor: Volvo Car Corporation, 405 31 Göteborg (SE)
(72) Inventor: Hermansson, Jonas, 437 32, Lindome (SE); Johnsson, Anders, 416 55, Göteborg (SE); Vollmer, Niklas, 430 31, Åsa (SE)
(74) Representative: Holmberg, Magnus

(56) References cited:
- EP-A- 0 931 923
- EP-A1- 1 174 612
- EP-A2- 0 935 056
- US-A1- 2003 224 907
- US-B2- 6 901 749

## Description

### TECHNICAL FIELD

The present invention relates to a method for an exhaust gas treatment device in an engine system comprising an internal combustion engine with at least one cylinder, and fuel injection means. The invention also relates to an engine system comprising an internal combustion engine with at least one cylinder and fuel injection means, the engine system further comprising an engine control unit adapted to control the fuel injection means.

### BACKGROUND

Modem vehicles are equipped with exhaust gas treatment devices, known as catalytic converters, that convert toxic gases such as hydrocarbons (HC), carbon monoxide (CO) and nitrogen oxides (NOx) into substances such as carbon dioxide (CO2), nitrogen (N2) and water (H2O). A known problem with catalytic converters is that certain substances can remain, for example by physical or chemical adsorption, on internal surfaces of the converters, and reduce the capacity of the converters. Such detrimental adsorption is known as catalytic converter poisoning. For example, fuels, whether gasoline or diesel, for vehicle internal combustion engines, contain a relatively high amount of sulfur, typically depending on in which state or region they are provided. The sulfur creates problems for the operation of the catalyst exhaust gas treatment devices. In the engine combustion process, the sulfur is converted to sulfur oxides (SOx), which adsorbs strongly to internal surfaces of the catalyst and therefore reduces its exhaust gas treatment capacity. This process is often referred to as sulfur poisoning. Sulfur adsorption is particularly strong during low load driving conditions.

A number of catalytic converter regeneration measures to solve this problem have been suggested. It is well known that the catalytic converter can be restored from sulfur poisoning by being exposed to high temperatures.

The patent publication US6161377 suggests heating the catalytic converter by introducing secondary air into the exhaust gases, combined with providing a rich mixture to the cylinders. A disadvantage with this method is that it requires an additional component in the form of an air pump for the introduction of the secondary air. Apart from adding to the complexity and the cost of the engine system, such an air pump creates a noise, which can be disturbing to drivers and passengers in a vehicle in which the pump is installed. Further, a high exhaust gas pressure can give an excessive load to the air pump. Also, since air, according to said patent publication, is injected downstream of the engine, relatively close to the catalytic converter, there is a great risk that the fuel and air will not be fully mixed when reaching the catalytic converter. This reduces the efficiency of the regeneration method, and can cause concentration of fuel, which may result in damage of the catalytic converter.

The patent publication US6901749 discloses, in order to heat the catalytic converter, providing a rich mixture to the engine cylinders combined with adjusting the ignition timing so as to provide a relatively late ignition during the engine cycles. The idea is to allow combustion to continue in the exhaust conduit downstream of the engine cylinders in order to heat the catalytic converter. However, this measure has the disadvantage that it causes vibration and affects the drivability negatively in a vehicle, in which it is carried out. In addition, it increases the fuel consumption, and reduces the available torque of the engine. Also, since the energy for heating the catalytic converter is transported thermally, there are substantial energy losses between the engine and the catalytic converter in the form of temperature decrease. In the case of the catalytic converter being provided relatively far from the engine, the energy losses may be such that no, or an insufficient result is provided by the measure. Also, in the case of the engine system being equipped with an exhaust turbo charger, the energy losses at the delayed ignition regeneration measure are further increased.

Document US 2003/224907 discloses a part cylinder operation of a spark ignition internal combustion engine. A certain part of the cylinders can be deactivated based on a desired engine output. Engine torque is controlled by throttle position and spark timing. The document further proposes, as a standard measure, to reactivate all cylinders if an exhaust temperature increase is required like during a sulfur regeneration. Furthermore, the document proposes that in fact, it is not required to reactivate cylinders to increase exhaust gas temperature. Instead, this can be done by injecting fuel into deactivated cylinders to supply combustible mixture to the exhaust catalyst. It is thus disclosed to perform a temperature increase mode, like for sulfur regeneration, injecting fuel into deactivated cylinders. Finally, the document discloses an example of a sulfur regeneration processing. In this example, sulfur regeneration is performed in a part cylinder operation with rich combustion air-fuel ratio in operating cylinders and no fuel injected to inoperative cylinders. The throttle valve is used to control the exhaust air-fuel ratio to a target value. The NOx trap temperature is controlled by air control and spark timing control. The option to inject fuel into the deactivated cylinders is not discussed in the light of this sulfur regeneration process.

Document EP 1 174 612 discloses a diesel particulate filter regeneration taking place in an engine braking state. According to this document, fuel is injected into the cylinders at a late timing, ineffective for torque production and purely for supplying a combustible mixture to an oxidation catalyst to generate heat for filter regeneration. Details of air control are not disclosed in this document.

### SUMMARY OF THE INVENTION

It is an object of the present invention to provide optimum efficiency of an exhaust gas treatment device.

It is also an object of the present invention to improve regeneration of exhaust gas treatment devices in engine systems with internal combustion engines.

In addition, it is an object of the present invention to provide regeneration of exhaust gas treatment devices in vehicles without causing discomfort or disturbance to any person in the vehicle.

It is also an object of the present invention to minimize the effects of an exhaust gas treatment device regeneration measure on the drivability of a vehicle provided with the exhaust gas treatment device.

It is a further object of the present invention to provide regeneration of exhaust gas treatment devices in engine systems with a minimal amount of increase in the complexity of the engine system.

These objects are reached with a method as defined in the appended claim 1.

By allowing fuel injection while combustion is inhibited, the fuel can be thoroughly mixed with air in the cylinder(s). The long transportation after the cylinder(s) allows additional mixture of the air and fuel before reaching the catalytic converter. This provides a homogenous distribution of fuel and air across the lateral extensions of the catalytic converter, in which the mixture is combusted so as to heat the exhaust gas treatment device. The result is a very effective regeneration, and minimizing risks of the regeneration measure causing damage to the catalytic converter. This thorough regeneration is provided simply by use of the fuel injection means, without the need for additional equipment in the engine system.

Also, the regeneration method may be carried out without causing disturbance to drivers and passengers in a vehicle provided with the engine system. In addition, the invention does not lead to any vibration in a vehicle, in which it is used. More generally, use of the invention does not lead to any deterioration in the noise, vibration and harshness (NVH) performance of the vehicle. Also, since the energy for heating the catalytic converter is transported chemically, i.e. in the air/fuel mixture, and converted to thermal energy in the catalytic converter, there are essentially no energy losses between the engine and the catalytic converter. Thus, the invention provides a very effective regeneration measure, even in a case where the catalytic converter is provided relatively far from the engine, and/or in the case of the engine system being equipped with a exhaust turbo charger.

The use of fuel injection while combustion is inhibited for heating exhaust gas treatment device makes the method advantageous for low load conditions, at which the exhaust gas treatment device temperature is relatively low, and sulfur adsorption in particularly strong.

Preferably, the step of inhibiting combustion comprises controlling ignition means at the cylinder so that combustion is inhibited. Thereby, the method is adapted to spark ignition engines, at which ignition is inhibited during at least one operative cycle of the cylinder(s) during which cycle fuel is allowed to the cylinder, which allows after-combustion of the air/fuel mixture, i.e. allows it to pass the cylinder(s) and the exhaust manifold, and to be combusted in the exhaust gas treatment device.

Alternatively or in addition to ignition inhibition, the combustion inhibition could comprise controlling at least one exhaust valve at at least one of the cylinders into which fuel is allowed so as to reduce or eliminate an increase in pressure in the cylinder. Thereby, a valve control system, in itself known to the person skilled in the art, can be used to open the exhaust valve(s) when at a compression stroke of the cylinder the piston is moving from the bottom dead centre to the top dead centre.

Preferably, the fuel injection exhaust gas treatment device regeneration is performed if the existence of at least one condition indicative of a fuel injection inhibition is determined. Thereby, the regeneration is performed during a fuel cut mode of the engine, for example caused by an accelerator pedal being released by a driver of a vehicle in which the method is used. This makes it possible to provide a timing of the regeneration, at which it does not in any way interfere with other aspects of the engine operation, In a vehicle, performing the fuel injection exhaust gas treatment device regeneration in situations in which there is normally a fuel cut provides a simple and effective regeneration, that may be carried out without causing disturbance to drivers and passengers. Further, the fuel injection exhaust gas treatment device regeneration does not compromise output torque requirements during the vehicle operation. In other words, the available torque of the engine is not affected.

It should be noted that the existence of the at least one condition indicative of a fuel injection inhibition can be determined in a variety of manners. For example, the condition can correspond to a fuel injection control parameter corresponding to no fuel injection, an accelerator pedal setting signal corresponding to a released accelerator pedal, or a requested torque parameter value corresponding to zero (or negative) requested torque. In general, any parameter related to the fuel injection control can be used to determine the condition indicative of a fuel injection inhibition. Also, the condition can be determined before a fuel cut period has commenced, for example where a released accelerator pedal signal is used as the condition, or after a fuel cut period has commenced, for example where a fuel injection control parameter corresponding to no fuel injection is used as the condition indicative of a fuel injection inhibition.

For instance, if the requested torque in a vehicle is at or below a threshold value, usually a fuel cut mode, in which the fuel injection is inhibited, follows. Thus, according to one embodiment, the step of determining the existence of a condition, indicative of a fuel injection inhibition, comprises determining a value of a control parameter corresponding to, or being related to a requested torque of the engine, and comparing the determined control parameter value with a control parameter threshold value, the determination of the existence of a condition indicative of a fuel injection inhibition, being dependent on the comparison between the determined control parameter value and the control parameter threshold value. Preferably, it is determined that the fuel injection means are not controlled so as to inhibit fuel injection if the requested torque is above the requested torque threshold value. Usually, a zero or a negative requested torque, for example caused by an accelerator pedal being released by a driver of a vehicle in which the method is used, is followed by a fuel cut mode in which the fuel injection is inhibited. Thus, in one embodiment, the requested torque threshold value is zero.

Preferably, the method comprises determining during the fuel injection exhaust gas treatment device regeneration the temperature of the exhaust gas treatment device, and terminating the fuel injection exhaust gas treatment device regeneration if it is determined that the temperature of the exhaust gas treatment device is above a predetermined temperature limit value, Thereby, temperatures that are high enough to cause a risk of damaging the catalytic converter can be effectively avoided. It should be noted that avoiding too high catalytic converter temperatures is of outmost importance to prevent premature catalytic converter ageing.

Preferably, the method comprises determining during the fuel injection exhaust gas treatment device regeneration a value of a control parameter corresponding to, or being related to a requested torque of the engine, determining whether the control parameter value is above a predetermined threshold value, and terminating the fuel injection exhaust gas treatment device regeneration if it is determined that the control parameter value is above the predetermined threshold value. Thereby, the fuel injection exhaust gas treatment device regeneration can be quickly terminated, for example by allowing ignition again, in order to allow the engine to deliver the torque requested. This makes it possible to quickly respond to torque requests based on accelerator pedal maneuverings.

The invention is applicable to engines in which the fuel injection means are adapted to inject fuel into an air inlet duct communicating with more than one cylinder or all cylinders, or to engines in which the fuel injection can be controlled individually for each cylinder. In the latter case, and where the engine comprises at least two cylinders, preferably the method further comprises determining the temperature of the exhaust gas treatment device, the number of cylinders into which fuel is allowed while combustion is inhibited being dependent on the temperature of the exhaust gas treatment device. Thus, where ignition is inhibited in cylinders, fuel can be injected in one or more of the cylinders, depending on the exhaust gas treatment device temperature. For example, if, during the regeneration, it is desired to decrease the exhaust gas treatment device temperature, the number of cylinders in which fuel is injected while ignition is inhibited can be decreased, and vice versa. Thus, a very advantageous manner of monitoring and controlling the exhaust gas treatment device temperature is provided, which gives excellent possibilities of obtaining a fast and powerful regeneration without the risk of damaging the exhaust gas treatment device.

In one embodiment, the method comprises determining the temperature of the exhaust gas treatment device, the amount of fuel allowed into the at least one of the cylinders, in which combustion is inhibited, being controlled in dependence on the temperature of the exhaust gas treatment device. For example, if, during the regeneration, it is desired to decrease the exhaust gas treatment device temperature, the amount of fuel injected while ignition is inhibited can be decreased, and vice versa. The control of the injected amount of fuel provides an advantageous manner of monitoring and controlling the exhaust gas treatment device temperature. This control can be used individually, or in combination with said control of the number of cylinders into which fuel is allowed while combustion is inhibited. Thereby, the control of the number of cylinders into which fuel is allowed, while combustion is inhibited, can be used as for a coarse temperature control, and the control of the injected amount of fuel, in the respective cylinder in which fuel is allowed, can be used for a fine temperature control. This provides a fast and precise control of the exhaust gas treatment device temperature.

Preferably, the method comprises controlling air flow control means so as to control the combustion in the exhaust gas treatment device during the fuel injection exhaust gas treatment device regeneration. By adjusting the air flow, for example based on the flow of fuel injected, it can be secured that a combustible air/fuel mixture is provided to the catalytic converter during the regeneration action. Also, controlling the combustion in the exhaust gas treatment device could comprise controlling a location or a region of a maximum temperature in the exhaust gas treatment device. Thereby, as explained closer below, the air flow control means, for example comprising a throttle valve, can be used to control the temperature distribution in a longitudinal direction of the catalytic converter. By changing, during the sulfur regeneration, the location of the maximum temperature, it is possible to obtain a particularly thorough regeneration, since it can be secured that the temperature is increased sufficiently for sulfur deposit removal throughout the entire catalytic converter. Also, moving the maximum temperature in this way further reduces the risk of damaging the catalytic converter by high temperature exposure. Specially, the risk of excessive temperatures in an upstream end of the catalytic converter can be substantially reduced, so that catalytic converter damage can be effectively avoided.

The objects are also reached with an engine system according to any of the claims 9-16.

### DESCRIPTION OF THE FIGURES

Below, the invention will be described in detail with reference to the drawings, in which
- fig. 1 shows a schematic view of parts of a vehicle engine system,
- fig. 2 shows a block diagram depicting a method according to a preferred embodiment of the invention,
- fig. 3 shows a block diagram depicting a method according to an alternative embodiment of the invention, and
- fig. 4 is a schematic side view of a detail in fig. 1 with temperature distribution curves.

### DETAILED DESCRIPTION

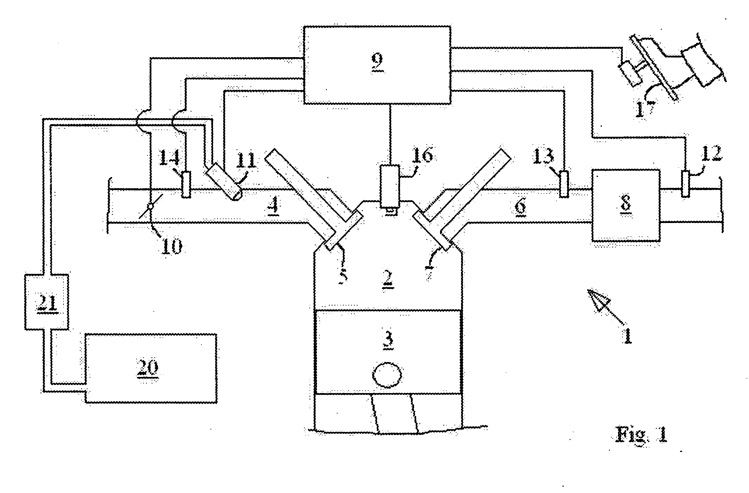

Fig. 1 shows a schematic view of parts of a vehicle engine system 1 comprising an internal combustion engine. The engine comprises at least one cylinder 2 with a reciprocating piston 3. Communication between the cylinder 2 and an inlet duct 4 is controlled by at least one inlet valve 5, and communication between the cylinder 2 and an exhaust duct 6 is controlled by at least one exhaust valve 7. Downstream from the cylinder(s) 2, an exhaust gas treatment device 8, in the form of a catalytic converter, is provided.

The engine system 1 also comprises an engine control unit (ECU) 9, which can be provided as one unit, or as more than one logically interconnected physical units. The ECU 9 is adapted to control air flow control means comprising a throttle valve 10, and fuel injection means 11 comprising at least one fuel injector 11 in the inlet duct 4. In this embodiment, where the engine presents more than one cylinder, the fuel injection can be controlled individually for each cylinder, by a fuel injector being provided at a separate portion of the inlet duct 4 communicating with the respective cylinder, (so called port fuel injection). Alternatively, as is known in the art, a fuel injector can be provided in each cylinder 2, (so called direct fuel injection). As a further alternative, one single fuel injector can be provided for more than one cylinder, or all cylinders, for example at an upstream portion of the inlet duct communicating with more than one cylinder, or all cylinders. The fuel injection means 11 communicate with fuel storage means in the form of a fuel tank 20, via a fuel pump 21.

The ECU 9 is also adapted to receive signals from a first gas sensor 12 located downstream of the catalytic converter 8, as well as from a second gas sensor 13 located in the exhaust duct 6 between the cylinder 2 and the catalytic converter 8. The ECU 9 is adapted to determine, based on the signals from the first and second sensors 12, 13, the oxygen content in the exhaust gases upstream and downstream, respectively, of the catalytic converter 8. As is known in the art, the oxygen content in the exhaust gases is indicative of the lambda value of the air/fuel mixture provided to the engine.

In addition, the ECU 9 is also adapted to determine the engine air flow based on signals received from an air flow sensor 14 located in the inlet duct 4. As an alternative, as is known in the art, the air flow can be computed based on parameters such as the inlet manifold pressure, throttle position, engine speed, inlet temperature, and atmospheric pressure. Manners of determining the values of these parameters are known in the art, and not explained further here.

The ECU 9 is adapted to determine the temperature of the catalytic converter 8 based at least partly on the air flow, the lambda value, the ambient temperature, engine load, and engine rotational speed. As an alternative, the ECU 9 can be adapted to receive signals from a temperature sensor located in the exhaust duct 6 between the cylinder 2 and the catalytic converter 8, based on which signals, the catalytic converter temperature can be determined.

Further, at each cylinder, ignition means 16 comprising a spark plug 16 are provided and controllable by the ECU 9. Also, the ECU is adapted to adjust, as known in the art, the value of a requested torque parameter based on signals from an accelerator pedal 17 in the vehicle. The ECU 9 is also adapted to determine based on signals from the accelerator pedal 17, whether the requested torque is below a predetermined requested torque threshold value. In a preferred embodiment, this requested torque threshold value corresponds to no or a negative requested torque, but it can alternatively be some other, preferably small requested torque value. If there is no or negative requested torque, it can be determined that the accelerator 17 is released, i.e. un-depressed. The ECU 9 is adapted to control the fuel injection means 11, if it is determined that the accelerator pedal 17 is released, so that fuel injection is inhibited.

The ECU 9 is adapted to determine, based at least partly on an analysis of a signal from the first gas sensor 12, the level of sulfur poisoning of the catalytic converter 8, and whether the catalytic converter 8 is subjected to sulfur poisoning, as described in the European patent application entitled "An internal combustion engine system and a method for determining a condition of an exhaust gas treatment device in a such a system", filed by the applicant on the first filing date of the present application, and incorporated herein by reference.

Alternatively, the ECU 9 can be adapted to determine the level of sulfur poisoning of the catalytic converter 8, and whether the catalytic converter 8 is subjected to sulfur poisoning, by some alternative method. For example, a sulfur poisoning establishment procedure can include adjusting in the ECU 9 a sulfur oxide (SOx) adsorption counter, based on air-fuel ratio, engine operating condition, catalyst temperature, the engine rotational speed and the intake pressure.

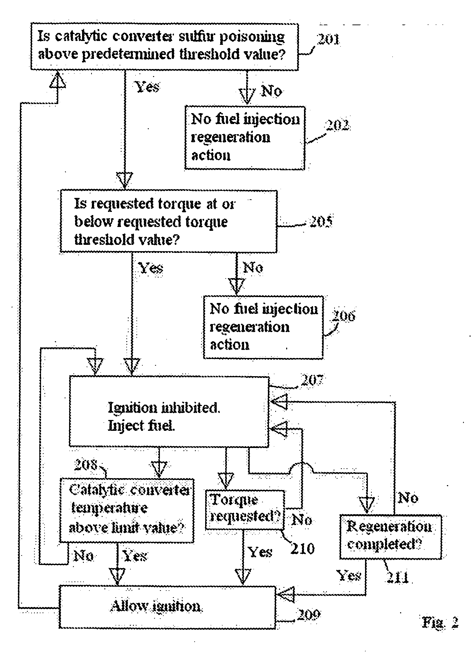

Fig. 2 depicts a method according to a preferred embodiment of the invention. The ECU 9 determines 201 whether data corresponding to the level of sulfur poisoning of the catalytic converter is above a predetermined sulfur poisoning threshold value. If it is determined that the data corresponding to the level of sulfur poisoning is not above the sulfur poisoning threshold value, it is determined 202 that no fuel injection sulfur regeneration action is carried out.

If it is determined that the data corresponding to the level of sulfur poisoning is above the sulfur poisoning threshold value, it is determined 205 whether the requested torque is at or below a predetermined threshold value, for example due to a detected release of the accelerator pedal 17. If it is determined that the requested torque is above the predetermined threshold value, it is determined 206 that no fuel injection sulfur regeneration action is carried out. In a preferred embodiment, if it is determined that the requested torque is positive, it is determined 206 that no fuel injection sulfur regeneration action is carried out.

If it is determined that the requested torque is at or below the predetermined threshold value, a fuel injection sulfur regeneration action, herein also referred to as a fuel injection exhaust gas treatment device regeneration, is carried out 207, comprising inhibiting ignition by the ignition means 16, and allowing fuel injection. Thereby, the air and fuel is transported from the cylinder(s) 2 and through the exhaust duct 6. During this relatively long transportation, the air and fuel is allowed to mix well to provide a substantially homogenous mixture. The mixture reaches the catalytic converter 8 where it is combusted to increase the temperature of the converter 8 in order to eliminate sulfur deposits.

During the fuel injection sulfur regeneration action, the temperature of the catalytic converter 8 is monitored by the ECU 9. in a manner mentioned above. If the catalytic converter temperature rises above a predetermined temperature limit value 208, the fuel injection sulfur regeneration action is terminated 209 by allowing ignition by the ignition means 16,

During the fuel injection sulfur regeneration action, the setting of the accelerator pedal 17 is monitored by the ECU 9. If it is determined 210 that the requested torque, for example due to maneuvering of the accelerator pedal, is above the predetermined threshold value, the fuel injection sulfur regeneration action is terminated 209 by allowing ignition by the ignition means 16.

If during the fuel injection sulfur regeneration action, the engine speed falls below a minimum engine speed limit, the regeneration action is discontinued, by allowing ignition in the cylinders, in order to avoid the engine stopping to run.

As mentioned, the ECU 9 is adapted to determine the level of sulfur poisoning of the catalytic converter. Thereby, the ECU 9 can be adapted to terminate a regeneration action when the level of sulfur poisoning has been reduced to a predetermined level. Thus, referring to fig. 2, during the fuel injection sulfur regeneration action, the level of sulfur poisoning of the catalytic converter is determined 211. If it is determined that the level of sulfur poisoning has been reduced to the predetermined level, the fuel injection sulfur regeneration action is terminated 209 by allowing ignition by the ignition means 16.

Also, if the sulfur regeneration action is terminated 209, for example due to the catalytic converter temperature rising above the predetermined temperature limit value, or due to a torque above a predetermined limit value being requested, the level of sulfur poisoning at the interruption of the regeneration action can be established. Thereby, the regeneration action can be "continued" in a suitable manner, once circumstances, as described above, allow such a "continuation" to take place.

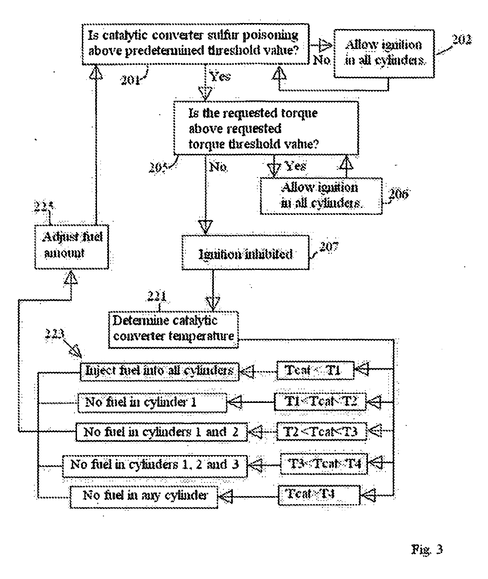

Reference is made to fig. 3, showing an alternative embodiment of the invention, suitable for engine systems in which the fuel injection can be controlled individually for each cylinder. In fig. 3 it is assumed that the engine comprises four cylinders, numbered 1-4. It should be noted that this alternative embodiment of the invention is applicable to multi-cylinder engines with any number of cylinders, i.e. two or more cylinders.

As in the embodiment described with reference to fig. 2, the ECU 9 determines 201 whether data corresponding to the level of sulfur poisoning of the catalytic converter is above a predetermined sulfur poisoning threshold value, and depending on this determination, it is determined 202 that no fuel injection sulfur regeneration action is carried out, or it is determined 205 whether the requested torque is above the requested torque threshold value. Depending on the determination 205 whether the requested torque is above the requested torque threshold value, it is determined 206 that no fuel injection sulfur regeneration action is carried out, or it is determined 207 that a fuel injection sulfur regeneration action is initiated by inhibiting ignition in all cylinders,

The temperature Tcat of the catalytic converter 8 is determined 221, and based on the temperature, the number of cylinders in which fuel is to be injected is determined 223.

If the catalytic converter temperature Tcat is below a first temperature threshold value T1, fuel is injected into all cylinders. If the catalytic converter temperature Tcat is above the first temperature threshold value T1 and below a second temperature threshold value T2, fuel is injected in all cylinders except one of them, in this example cylinder no. 1. If the catalytic converter temperature Tcat is above the second temperature threshold value T2 and below a third temperature threshold value T3, fuel is injected in all cylinders except two of them, in this example cylinders no. 1 and 2. If the catalytic converter temperature Tcat is above the third temperature threshold value T3 and below a fourth temperature threshold value T4, fuel is injected in all cylinders except three of them, in this example cylinders no. 1, 2 and 3. If the catalytic converter temperature Tcat is above the fourth temperature threshold value T4, no fuel is injected into any of the cylinders. By controlling the number of cylinders in which fuel is injected during ignition inhibition, a coarse temperature control of the catalytic converter 8 is achieved.

Regardless of the number of cylinders in which fuel is injected during ignition inhibition, the amount of fuel injected in each cylinder with ignition inhibition is controlled 225, so that a fine temperature control of the catalytic converter 8 is achieved.

Similar to the embodiment described with reference to fig. 2, the level of sulfur poisoning of the catalytic converter is determined 201. If it is determined 201 that the level of sulfur poisoning has been reduced to the predetermined level, the fuel injection sulfur regeneration action is terminated 202 by allowing ignition in all cylinders.

Also, similar to the embodiment described with reference to fig. 2, during the combustion inhibition sulfur regeneration action, the requested torque is continuously monitored, in order to determine whether the requested torque has changed so that the fuel injection sulfur regeneration action has to be terminated.

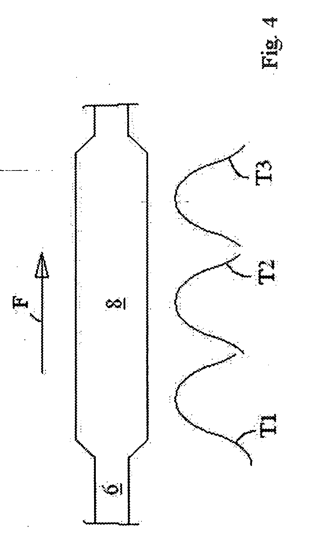

Reference is made to fig. 1 and 4. The method comprises controlling the throttle valve 10 so as to control the combustion in the catalytic converter 8 during the fuel injection exhaust gas treatment device regeneration, Based on the flow of fuel injected, the throttle is controlled so that a combustible air/fuel mixture is provided to the catalytic converter.

Referring to fig. 4, in which a gas flow direction is indicated with an arrow F, the throttle valve 10 is also used during the regeneration to control the location of a maximum temperature in the exhaust gas treatment device. By controlling the throttle valve 10 so that a relatively small air flow is provided, the air/fuel mixture will be combusted relatively far upstream in the catalytic converter 8. As a result, the temperature distribution in the catalytic converter, indicated in fig. 4 with the curve T1, will present a maximum relatively far upstream. By controlling the throttle valve 10 so that larger air flows are provided, the air/fuel mixture will be combusted further downstream in the catalytic converter 8. As a result, the temperature distribution in the catalytic converter, T2, T3, will present maximums further downstream, depending on the air flow. In other words, increasing the air flow will move the maximum temperature downstream.

Thus, the location of the maximum temperature can be changed, during the sulfur regeneration, which in turn makes it possible to obtain a particularly thorough regeneration, since it can be secured that the temperature is increased sufficiently for sulfur deposit removal throughout the entire catalytic converter.

In addition to a throttle valve 10, the air flow control means can comprise control means (not shown) for the inlet valve(s) 5 and/or the exhaust valve(s) 7, for example in the form of a variable valve timing (VVT) system and/or a cam profile shifting (CPS) system. Such inlet and/or exhaust valve control means can be used in addition to the throttle valve 10 for controlling the combustion in the catalytic converter 8 during the fuel injection exhaust gas treatment device regeneration.

Besides exhaust gas treatment device poisoning caused by sulfur, the invention is equally applicable to poisoning caused by other substances, such as phosphorus. In particular, the invention results in the catalyst average temperature being kept higher, and as a result, long term phosphorus poisoning can be reduced.

## Claims

1. A method for an exhaust gas treatment device (8) in an engine system comprising an internal combustion engine with at least one cylinder (2) and fuel injection means (11), the method comprising
performing a fuel injection exhaust gas treatment device regeneration (207), comprising inhibiting combustion in the at least one cylinder (2),
controlling the fuel injection means (11) so that fuel is allowed into at least one cylinder (2), and
controlling a throttle valve (10) so as to control the combustion in the exhaust gas treatment device (8) during the fuel injection exhaust gas treatment device regeneration (207),
**characterized in that**
the step of inhibiting combustion in the at least one cylinder (2) comprises inhibiting combustion in all cylinders (2) of the internal combustion engine, and **in that**
controlling the combustion in the exhaust gas treatment device (8) comprises controlling a temperature distribution in a longitudinal direction of the exhaust gas treatment device (8) by changing, during the fuel injection exhaust gas treatment device regeneration (207), a location of a maximum temperature in the exhaust gas treatment device (8)
by controlling the throttle valve (10)

2. A method according to claim1, wherein the step of inhibiting combustion comprises controlling ignition means (16) at the cylinder (2) so that combustion is inhibited.

3. A method according to any of the preceding claim, wherein the fuel injection exhaust gas treatment device regeneration (207) is performed if the existence of at least one condition indicative of a fuel injection inhibition is determined.

4. A method according to claim 3, wherein the step of determining the existence of a condition, indicative of a fuel injection inhibition, comprises determining (205) a value of a control parameter corresponding to, or being related to a requested torque of the engin, and comparing the determined control parameter value with a control parameter threshold values, the determination of the existence of a condition indicative of a fuel injection inhibition, being dependent on the comparison between the determined control parameter value and the control parameter threshold value.

5. A method according to any of the preceding claims, comprising determining (208) during the fuel injection exhaust gas treatment device regeneration (207) the temperature of the exhaust gas treatment device (8), and terminating (209) the fuel injection exhaust gas treatment device regeneration (207) if it is determined (208) that the temperature of the exhaust gas treatment device (8) is above a predetermined temperature limit value.

6. A method according to any of the preceding claims, comprising determining (210) during the fuel injection exhaust gas treatment device regeneration (207) a value of a control parameter corresponding to, or being related to a requested torque of the engine, determining whether the control parameter value is above a predetermined threshold value, and terminating (209) the fuel injection exhaust gas treatment device regeneration (207) if it is determined that the control parameter value is above the predetermined threshold value.

7. A method according to any of the preceding claims, wherein the internal combustion engine comprises at least two cylinders (2), the method further comprising determining (221, 222) the temperature of the exhaust gas treatment device (8), the number of cylinders (2) into which fuel is allowed while combustion is inhibited being dependent (223, 224) on the temperature of the exhaust gas treatment device.

8. A method according to any of the preceding claims, comprising determining (221, 222) the temperature of the exhaust gas treatment device (8), the mount of fuel allowed into the at least one of the cylinders (2), in which combustion is inhibited, being controlled (225) in dependence on the temperature of the exhaust gas treatment device.

9. An engine system comprising an internal combustion engine with at least one cylinder (2) and fuel injection means (11), the engine system further comprising an engine control unit (9) adapted to control the fuel injection means (11), the engine control unit (9) being adapted to control a fuel injection exhaust gas treatment device regeneration (207), the engine control unit (9) being adapted to inhibit, during the fuel injection exhaust treatment device regeneration, combustion in the at least one cylinder (2), and to control, during the fuel injection exhaust gas treatment device regeneration (207), the fuel injection means (11) so that fuel is allowed into at least one cylinders (2), and the engine comprises air flow control means (10), the air flow control means (10) comprising a throttle valve (10), controllable by the engine control unit (9), the engine control unit (9) being adapted to control the throttle valve (10) so as to control the combustion in the exhaust gas treatment device (8) during the fuel injection exhaust gas treatment device regeneration, **characterized in that** the engine control unit (9) is adapted to inhibit, during the fuel injection exhaust treatment device regeneration, combustion in all cylinders (2) of the internal combustion engine, and **in that** the engine control unit (9) is adapted to control the throttle valve (10) so as to control a temperature distribution in a longitudinal direction of the exhaust gas treatment device (8) by changing, during the fuel injection exhaust gas treatment device regeneration (207), a location of a maximum temperature in the exhaust gas treatment device (8).

10. An engine system according to claim 9, wherein the engine comprises ignition means (16) at each cylinder (2), the engine control unit (9) being adapted to control the ignition means (16), during the fuel injection exhaust treatment device regeneration, so that ignition is inhibited such that combustion is inhibited in the cylinder (2) into which fuel is allowed.

11. An engine system according to any of the claims 9-10, wherein the engine control unit (9) is adapted to allow the fuel injection exhaust gas treatment device regeneration (207) if the existence of at least one condition indicative of a fuel injection inhibition is determined.

12. An engine system according to claim 11, wherein the engine control unit (9) is adapted to determine, for the determination of the existence of the condition indicative of a fuel injection inhibition, a value of a control parameter corresponding to, or being related to a requested torque of the engine, and to compare the determined control parameter value with a control parameter threshold value, the determination of the existence of a condition indicative of a fuel injection inhibition, being dependent on the comparison between the determined control parameter value and the control parameter threshold value.

13. An engine system according to any of the claims 9-12, wherein the engine control unit (9) is adapted to determine, during the fuel injection exhaust gas treatment device regeneration, the temperature of the exhaust gas treatment device (8), and to terminate the fuel injection exhaust gas treatment device regeneration if it is determined that the temperature of the exhaust gas treatment device (8) is above a predetermined temperature limit value.

14. An engine system according to any of the claims 9-13, wherein the engine control unit (9) is adapted to determine (210), during the fuel injection exhaust gas treatment device regeneration, a value of a control parameter corresponding to, or being related to a requested torque of the engine, to determine whether the control parameter value is above a predetermined threshold value, and to terminate (209) the fuel injection exhaust gas treatment device regeneration if it is determined that the control parameter value is above the predetermined threshold value.

15. An engine system according to any of the claims 9-14, wherein, wherein the internal combustion angine comprises at least two cylinders (2), the engine control unit (9) being adapted to determine the temperature of the exhaust gas treatment device (B), and to control the number of cylinders (2) into which fuel is allowed while combustion is inhibited in dependence on the temperature of the exhaust gas treatment device.

16. An engine system according to any of the claims 9-15, wherein the engine control unit (9) is adapted to determine the temperature of the exhaust gas treatment device (8), and to control the amount of fuel allowed into the at least one of the cylinders (2), in which combustion is inhibited, inhibited, in dependence on the temperature of the exhaust gas treatment device.

## Patentansprüche

1. Verfahren für eine Abgasbehandlungsvorrichtung (8) in einem Kraftmaschinensystem, das eine Brennkraftmaschine mit wenigstens einem Zylinder (2) und Kraftstoffeinspritzmitteln (11) umfasst, wobei das Verfahren umfasst:
Ausführen einer Regeneration (207) einer Abgasbehandlungsvorrichtung mittels Kraftstoffeinspritzung, die das Verhindern einer Verbrennung in dem wenigstens einen Zylinder (2) umfasst,
Steuern der Kraftstoffeinspritzmittel (11) in der Weise, dass Kraftstoff in wenigstens einen Zylinder (2) eingelassen wird, und
Steuern einer Drosselklappe (10), um die Verbrennung in der Abgasbehandlungsvorrichtung (8) während der Regeneration (207) der Abgasbehandlungsvorrichtung mittels Kraftstoffeinspritzung zu steuern,
**dadurch gekennzeichnet, dass**
der Schritt des Verhinderns der Verbrennung in dem wenigstens einen Zylinder (2) das Verhindern der Verbrennung in allen Zylindern (2) der Brennkraftmaschine umfasst und dass
das Steuern der Verbrennung in der Abgasbehandlungsvorrichtung (8) das Steuern einer Temperaturverteilung in einer Längsrichtung der Abgasbehandlungsvorrichtung (8) durch Ändern eines Ortes einer maximalen Temperatur in der Abgasbehandlungsvorrichtung (8) mittels Steuerung der Drosselklappe (10) während der Regeneration (207) der Abgasbehandlungsvorrichtung mittels Kraftstoffeinspritzung.

2. Verfahren nach Anspruch 1, wobei der Schritt des Verhinderns der Verbrennung das Steuern von Zündungsmitteln (16) bei dem Zylinder (2) in der Weise, dass die Verbrennung verhindert wird, umfasst.

3. Verfahren nach einem der vorhergehenden Ansprüche, wobei die Regeneration (207) der Abgasbehandlungsvorrichtung mittels Kraftstoffeinspritzung ausgeführt wird, falls die Existenz wenigstens eines Zustands, der eine Kraftstoffeinspritzverhinderung angibt, bestimmt wird.

4. Verfahren nach Anspruch 3, wobei der Schritt des Bestimmens der Existenz eines Zustands, der eine Kraftstoffeinspritzverhinderung angibt, das Bestimmen (205) eines Wertes eines Steuerparameters, der einem angefordertem Drehmoment der Kraftmaschine entspricht oder damit in Beziehung steht, und das Vergleichen des bestimmten Steuerparameterwertes mit einem Steuerparameter-Schwellenwert umfasst, wobei das Bestimmen der Existenz eines Zustands, der eine Kraftstoffeinspritzverhinderung angibt, von dem Vergleich zwischen dem bestimmten Steuerparameterwert und dem Steuerparameter-Schwellenwert abhängt.

5. Verfahren nach einem der vorhergehenden Ansprüche, das das Bestimmen (208) der Temperatur der Abgasbehandlungsvorrichtung (8) während der Regeneration (207) der Abgasbehandlungsvorrichtung mittels Kraftstoffeinspritzung und das Beenden (209) der Regeneration (207) der Abgasbehandlungsvorrichtung mittels Kraftstoffeinspritzung, falls bestimmt wird (208), dass die Temperatur der Abgasbehandlungsvorrichtung (8) über einem vorgegebenen Temperaturgrenzwert liegt, umfasst.

6. Verfahren nach einem der vorhergehenden Ansprüche, das das Bestimmen (210) eines Wertes eines Steuerparameters, der einem angeforderten Drehmoment der Kraftmaschine entspricht oder damit in Beziehung steht, während der Regeneration (207) einer Abgasbehandlungsvorrichtung mittels Kraftstoffeinspritzung, das Bestimmen, ob der Steuerparameterwert über einem vorgegebenen Schwellenwert liegt, und das Beenden (209) der Regeneration (207) der Abgasbehandlungsvorrichtung mittels Kraftstoffeinspritzung, falls bestimmt wird, dass der Steuerparameterwert über dem vorgegebenen Schwellenwert liegt, umfasst.

7. Verfahren nach einem der vorhergehenden Ansprüche, wobei die Brennkraftmaschine wenigstens zwei Zylinder (2) umfasst, wobei das Verfahren ferner das Bestimmen (221, 222) der Temperatur der Abgasbehandlungsvorrichtung (8) umfasst, wobei die Anzahl von Zylindern (2), in die Kraftstoff eingelassen wird, während die Verbrennung verhindert wird, von der Temperatur der Abgasbehandlungsvorrichtung abhängt (223, 224).

8. Verfahren nach einem der vorhergehenden Ansprüche, das ferner das Bestimmen (221, 222) der Temperatur der Abgasbehandlungsvorrichtung (8) umfasst, wobei die Kraftstoffmenge, die in den wenigstens einen der Zylinder (2), in dem die Verbrennung verhindert wird, eingelassen wird, in Abhängigkeit von der Temperatur der Abgasbehandlungsvorrichtung gesteuert wird (225).

9. Kraftmaschinensystem, das eine Brennkraftmaschine mit wenigstens einem Zylinder (2) und Kraftstoffeinspritzmitteln (11) umfasst, wobei das Kraftmaschinensystem ferner eine Kraftmaschinensteuereinheit (9) umfasst, die dazu ausgelegt ist, die Kraftstoffeinspritzmittel (11) zu steuern, wobei die Kraftmaschinensteuereinheit (9) dazu ausgelegt ist, eine Regeneration (207) einer Abgasbehandlungsvorrichtung mittels Kraftstoffeinspritzung zu steuern, wobei die Kraftmaschinensteuereinheit (9) dazu ausgelegt ist, während der Regeneration der Abgasbehandlungsvorrichtung mittels Kraftstoffeinspritzung eine Verbrennung in dem wenigstens einen Zylinder (2) zu verhindern und während der Regeneration (207) der Abgasbehandlungsvorrichtung mittels Kraftstoffeinspritzung die Kraftstoffeinspritzmittel (11) so zu steuern, dass Kraftstoff in wenigstens einen Zylinder (2) eingelassen wird, und wobei die Kraftmaschine Luftdurchfluss-Steuermittel (10) umfasst, wobei die Luftdurchfluss-Steuermittel (10) eine Drosselklappe (10) umfassen, die durch die Kraftmaschinensteuereinheit (9) gesteuert werden kann, wobei die Kraftmaschinensteuereinheit (9) dazu ausgelegt ist, die Drosselklappe (10) so zu steuern, dass die Verbrennung in der Abgasbehandlungsvorrichtung (8) während der Regeneration der Abgasbehandlungsvorrichtung mittels Kraftstoffeinspritzung gesteuert wird,
**dadurch gekennzeichnet, dass** die Kraftmaschinensteuereinheit (9) dazu ausgelegt ist, während der Regeneration der Abgasbehandlungsvorrichtung mittels Kraftstoffeinspritzung die Verbrennung in allen Zylindern (2) der Brennkraftmaschine zu verhindern, und dass die Kraftmaschinensteuereinheit (9) dazu ausgelegt ist, die Drosselklappe (10) so zu steuern, dass eine Temperaturverteilung in einer Längsrichtung der Abgasbehandlungsvorrichtung (8) durch Ändern eines Ortes einer maximalen Temperatur in der Abgasbehandlungsvorrichtung (8) während der Regeneration (207) der Abgasbehandlungsvorrichtung mittels Kraftstoffeinspritzung gesteuert wird.

10. Kraftmaschinensystem nach Anspruch 9, wobei die Kraftmaschine Zündungsmittel (16) bei jedem Zylinder (2) umfasst, wobei die Kraftmaschinensteuereinheit (9) dazu ausgelegt ist, die Zündungsmittel (16) während der Regeneration der Abgasbehandlungsvorrichtung mittels Kraftstoffeinspritzung in der Weise zu steuern, dass die Zündung verhindert wird, so dass eine Verbrennung in dem Zylinder (2), in den Kraftstoff eingelassen wird, verhindert wird.

11. Kraftmaschinensystem nach einem der Ansprüche 9-10, wobei die Kraftmaschinensteuereinheit (9) dazu ausgelegt ist, die Regeneration (207) der Abgasbehandlungsvorrichtung mittels Kraftstoffeinspritzung zuzulassen, falls die Existenz wenigstens eines Zustands, der eine Kraftstoffeinspritzverhinderung angibt, bestimmt wird.

12. Kraftmaschinensystem nach Anspruch 11, wobei die Kraftmaschinensteuereinheit (9) dazu ausgelegt ist, für die Bestimmung der Existenz des Zustands, der eine Kraftstoffeinspritzverhinderung angibt, einen Wert eines Steuerparameters zu bestimmen, der einem angeforderten Drehmoment der Kraftmaschine entspricht oder damit in Beziehung steht, und den bestimmten Steuerparameterwert mit einem Steuerparameter-Schwellenwert zu vergleichen, wobei die Bestimmung der Existenz eines Zustands, der eine Kraftstoffeinspritzverhinderung angibt, von dem Vergleich zwischen dem bestimmten Steuerparameterwert und dem Steuerparameter-Schwellenwert abhängt.

13. Kraftmaschinensystem nach einem der Ansprüche 9-12, wobei die Kraftmaschinensteuereinheit (9) dazu ausgelegt ist, während der Regeneration der Abgasbehandlungsvorrichtung mittels Kraftstoffeinspritzung die Temperatur der Abgasbehandlungsvorrichtung (8) zu bestimmen und die Regeneration der Abgasbehandlungsvorrichtung mittels Kraftstoffeinspritzung zu beenden, falls bestimmt wird, dass die Temperatur der Abgasbehandlungsvorrichtung (8) über einem vorgegebenen Temperaturschwellenwert liegt.

14. Kraftmaschinensystem nach einem der Ansprüche 9-13, wobei die Kraftmaschinensteuereinheit (9) dazu ausgelegt ist, während der Regeneration der Abgasbehandlungsvorrichtung mittels Kraftstoffeinspritzung einen Wert eines Steuerparameters zu bestimmen (210), der dem angeforderten Drehmoment der Kraftmaschine entspricht oder damit in Beziehung steht, zu bestimmen, ob der Steuerparameterwert über einem vorgegebenen Schwellenwert liegt, und die Regeneration der Abgasbehandlungsvorrichtung mittels Kraftstoffeinspritzung zu beenden (209), falls bestimmt wird, dass der Steuerparameterwert über dem vorgegebenen Schwellenwert liegt.

15. Kraftmaschinensystem nach einem der Ansprüche 9-14, wobei die Brennkraftmaschine wenigstens zwei Zylinder (2) umfasst, wobei die Kraftmaschinensteuereinheit (9) dazu angelegt ist, die Temperatur der Abgasbehandlungsvorrichtung (8) zu bestimmen und die Anzahl von Zylindern (2), in die Kraftstoff eingelassen wird, während die Verbrennung verhindert wird, in Abhängigkeit von der Temperatur der Abgasbehandlungsvorrichtung zu steuern.

16. Kraftmaschinensystem nach einem der Ansprüche 9-15, wobei die Kraftmaschinensteuereinheit (9) dazu ausgelegt ist, die Temperatur der Abgasbehandlungsvorrichtung (8) zu bestimmen und die Kraftstoffmenge, die in wenigstens einen der Zylinder (2), in dem die Verbrennung verhindert wird, eingelassen wird, in Abhängigkeit von der Temperatur der Abgasbehandlungsvorrichtung zu steuern.

## Revendications

1. Procédé pour dispositif de traitement des gaz d'échappement (8) dans un système de moteur comprenant un moteur à combustion interne avec au moins un cylindre (2) et des moyens d'injection de carburant (11), le procédé comprenant la réalisation d'une régénération (207) du dispositif de traitement des gaz d'échappement agissant sur l'injection de carburant, comprenant l'inhibition de la combustion dans le au moins un cylindre (2), la commande des moyens d'injection de carburant (11), de sorte que du carburant est admis dans au moins un cylindre (2) et la commande d'un papillon des gaz (10) afin de commander la combustion dans le dispositif de traitement des gaz d'échappement (8) au cours de la régénération (207) du dispositif de traitement des gaz d'échappement agissant sur l'injection de carburant, **caractérisé en ce que** l'étape consistant à inhiber la combustion dans le au moins un cylindre (2) comprend l'inhibition de la combustion dans tous les cylindres (2) du moteur à combustion interne et **en ce que** la commande de la combustion dans le dispositif de traitement des gaz d'échappement (8) comprend la commande de la répartition de la température dans le sens longitudinal du dispositif de traitement des gaz d'échappement (8) en modifiant, au cours de la régénération (207) du dispositif de traitement des gaz d'échappement agissant sur l'injection de carburant, un emplacement à température maximale dans le dispositif de traitement des gaz d'échappement (8) en commandant le papillon des gaz (10).

2. Procédé selon la revendication 1, dans lequel l'étape consistant à inhiber la combustion comprend la commande de moyens d'allumage (16) au niveau du cylindre (2) de manière à inhiber la combustion.

3. Procédé selon l'une quelconque des revendications précédentes, dans lequel la régénération (207) du dispositif de traitement des gaz d'échappement agissant sur l'injection de carburant est réalisée si l'on a déterminé l'existence d'au moins une condition indiquant l'inhibition de l'injection de carburant.

4. Procédé selon la revendication 3, dans lequel l'étape consistant à déterminer l'existence d'une condition indiquant l'inhibition de l'injection de carburant comprend la détermination (205) d'une valeur de paramètre de commande correspondant ou liée à un couple moteur requis et à comparer la valeur de paramètre de commande déterminée avec une valeur seuil de paramètre de commande, la détermination de l'existence d'une condition indiquant l'inhibition de l'injection de carburant dépendant de la comparaison entre la valeur de paramètre de commande déterminée et la valeur seuil de paramètre de commande.

5. Procédé selon l'une quelconque des revendications précédentes, comprenant la détermination (208), au cours de la régénération (207) du dispositif de traitement des gaz d'échappement agissant sur 1"injection de carburant, de la température du dispositif de traitement des gaz d'échappement (8), et la fin (209) de la régénération (207) du dispositif de traitement des gaz d'échappement agissant sur l'injection de carburant si l'on a déterminé (208) que la température du dispositif de traitement des gaz d'échappement (8) est supérieure à une valeur limite de température prédéterminée.

6. Procédé selon l'une quelconque des revendications précédentes, comprenant le fait de déterminer (210), au cours de la régénération (207) du dispositif de traitement des gaz d'échappement agissant sur l'injection de carburant, d'une valeur de paramètre de commande correspondant ou liée à un couple moteur requis, de déterminer si la valeur de paramètre de commande est supérieure à une valeur seuil prédéterminée et de terminer (209) la régénération (207) du dispositif de traitement des gaz d'échappement agissant sur l'injection de carburant si l'on a déterminé que la valeur de paramètre de commande est supérieure à la valeur seuil prédéterminée.

7. Procédé selon l'une quelconque des revendications précédentes, dans lequel le moteur à combustion interne comprend au moins deux cylindres (2), le procédé comprenant en outre la détermination (221, 222) de la température du dispositif de traitement des gaz d'échappement (8), le nombre de cylindres (2) où du carburant est admis tandis que la combustion est inhibée en fonction (223, 224) de la température du dispositif de traitement des gaz d'échappement.

8. Procédé selon l'une quelconque des revendications précédentes, comprenant la détermination (221, 222) de la température du dispositif de traitement des gaz d'échappement (8), la quantité de carburant admise dans le au moins un des cylindres (2), où la combustion est inhibée, étant commandée (225) en fonction de la température du dispositif de traitement des gaz d'échappement.

9. Système de moteur comprenant un moteur à combustion interne avec au moins un cylindre (2) et des moyens d'injection de carburant (11), le système de moteur comprenant en outre un boîtier électronique de gestion moteur (9) adapté pour commander les moyens d'injection de carburant (11), le boîtier électronique de gestion moteur (9) étant adapté pour commander la régénération (207) du dispositif de traitement des gaz d'échappement agissant sur l'injection de carburant, le boîtier électronique de gestion moteur (9) étant adapté pour inhiber, au cours de la régénération du dispositif de traitement des gaz d'échappement agissant sur l'injection de carburant, la combustion dans le au moins un cylindre (2) et pour commander, au cours de la régénération (207) du dispositif de traitement des gaz d'échappement agissant sur l'injection de carburant, les moyens d'injection de carburant (11), de sorte que du carburant est admis dans au moins un cylindre (2), et le moteur comprend des moyens de commande d'écoulement d'air (10), les moyens d'écoulement d'air (10) comprenant un papillon des gaz (10) pouvant être commandé par le boîtier électronique de gestion moteur (9), le boîtier électronique de gestion moteur (9) étant adapté pour commander le papillon des gaz (10) afin de commander la combustion dans le dispositif de traitement des gaz d'échappement (8) au cours de la régénération du dispositif de traitement des gaz d'échappement agissant sur l'injection de carburant, **caractérisé en ce que** le boîtier électronique de gestion moteur (9) est adapté pour inhiber, au cours de la régénération du dispositif de traitement des gaz d'échappement agissant sur l'injection de carburant, la combustion dans tous les cylindres (2) du moteur à combustion interne, et **en ce que** le boîtier électronique de gestion moteur (9) est adapté pour commander le papillon des gaz (10) afin de commander la répartition de la température dans le sens longitudinal du dispositif de traitement des gaz d'échappement (8) en modifiant, au cours de la régénération (207) du dispositif de traitement des gaz d'échappement agissant sur l'injection de carburant, un emplacement à température maximale dans le dispositif de traitement des gaz d'échappement (8).

10. Système de moteur selon la revendication 9, dans lequel le moteur comprend des moyens d'allumage (16) à chaque cylindre (2), le boîtier électronique de gestion moteur (9) étant adapté pour commander les moyens d'allumage (16), au cours de la régénération du dispositif de traitement des gaz d'échappement agissant sur l'injection de carburant, de manière que l'allumage soit inhibé, de sorte que la combustion est inhibée dans le cylindre (2) où est admis du carburant.

11. Système de moteur selon l'une quelconque des revendications 9 ou 10, dans lequel le boîtier électronique de gestion moteur (9) est adapté pour permettre la régénération (207) du dispositif de traitement des gaz d'échappement agissant sur 1"injection de carburant si l'on a déterminé l'existence d'au moins une condition indiquant l'inhibition de l'injection de carburant.

12. Système de moteur selon la revendication 11, dans lequel le boîtier électronique de gestion moteur (9) est adapté pour déterminer, afin de permettre la détermination de l'existence de la condition indiquant l'inhibition de l'injection de carburant, une valeur de paramètre de commande correspondant ou liée à un couple moteur requis, et pour comparer la valeur de paramètre de commande déterminée avec une valeur seuil de paramètre de commande, la détermination de l'existence d'une condition indiquant l'inhibition de l'injection de carburant dépendant de la comparaison entre la valeur de paramètre de commande déterminée et la valeur seuil de paramètre de commande.

13. Système de moteur selon l'une quelconque des revendications 9 à 12, dans lequel le boîtier électronique de gestion moteur (9) est adapté pour déterminer, au cours de la régénération du dispositif de traitement des gaz d'échappement agissant sur 1"injection de carburant, la température du dispositif de traitement des gaz d'échappement (8), et pour terminer la régénération du dispositif de traitement des gaz d'échappement agissant sur l'injection de carburant si l'on a déterminé que la température du dispositif de traitement des gaz d'échappement (8) est supérieure à une valeur limite de température prédéterminée.

14. Système de moteur selon l'une quelconque des revendications 9 à 13, dans lequel le boîtier électronique de gestion moteur (9) est adapté pour déterminer (210), au cours de la régénération du dispositif de traitement des gaz d'échappement agissant sur l'injection de carburant, une valeur de paramètre de commande correspondant ou liée à un couple moteur requis, pour déterminer si la valeur de paramètre de commande est supérieure à une valeur seuil prédéterminée, et pour terminer (209) la régénération du dispositif de traitement des gaz d'échappement agissant sur l'injection de carburant si l'on a déterminé que la valeur de paramètre de commande est supérieure à la valeur seuil prédéterminée.

15. Système de moteur selon l'une quelconque des revendications 9 à 14, dans lequel le moteur à combustion interne comprend au moins deux cylindres (2), le boîtier électronique de gestion moteur (9) étant adapté pour déterminer la température du dispositif de traitement des gaz d'échappement (8) et pour commander le nombre de cylindres (2) où est admis du carburant tandis que la combustion est inhibée en fonction de la température du dispositif de traitement des gaz d'échappement.

16. Système de moteur selon l'une quelconque des revendications 9 à 15, dans lequel le boîtier électronique de gestion moteur (9) est adapté pour déterminer la température du dispositif de traitement des gaz d'échappement (8) et pour commander la quantité de carburant admise dans le au moins un des cylindres (2), où la combustion est inhibée, en fonction de la température du dispositif de traitement des gaz d'échappement.
